# EUROPEAN PATENT SPECIFICATION

(11) **EP 2 654 920 B1**
(45) Date of publication and mention of the grant of the patent: **24.01.2018**
(21) Application number: 11811248.1
(22) Date of filing: 20.12.2011
(51) Int. Cl.: B01D 39/16, H01M 2/16, B01D 46/54

(54) **HIGH POROSITY FILTER MEDIA**
FILTERMEDIEN VON HOHER POROSITÄT
MILIEUX FILTRANTS À POROSITÉ ÉLEVÉE

(30) Priority: 20.12.2010 US 201061424792 P
(43) Date of publication of application: 30.10.2013
(73) Proprietor: E. I. du Pont de Nemours and Company, Wilmington, DE 19898 (US)
(72) Inventor: VELU, Yogeshwar K., Midothian, Virginia 23112 (US); GIVENS, Steven R., Richmond, Virginia 23236 (US); GUCKERT, Joseph Robert, Chester, Virginia 23836 (US)
(74) Representative: Heinemann, Monica
(86) International application number: PCT/US2011/066330
(87) International publication number: WO 2012/088205

(56) References cited:
- EP-A1- 2 202 337
- WO-A1-2010/107503
- WO-A2-2008/116844
- US-A1- 2007 075 015
- US-A1- 2007 102 372
- C. HUANG ET AL: "High-Strength Mats from Electrospun Poly(p-Phenylene Biphenyltetracarboximide) Nanofibers", ADVANCED MATERIALS, vol. 18, no. 5, 3 March 2006 (2006-03-03), pages 668-671, XP55020876, ISSN: 0935-9648, DOI: 10.1002/adma.200501806
- HUANG C ET AL: "High strength electrospun polymer nanofibers made from BPDA-PDA polyimide", EUROPEAN POLYMER JOURNAL, PERGAMON PRESS LTD. OXFORD, GB, vol. 42, no. 5, 1 May 2006 (2006-05-01), pages 1099-1104, XP028029835, ISSN: 0014-3057, DOI: 10.1016/J.EURPOLYMJ.2005.11.005 [retrieved on 2006-05-01]

## Description

### FIELD OF THE INVENTION

The present invention relates to filtration media comprising one or more layers of nanofibers. The filtration media are especially suitable for filtering contaminants from liquids.

### BACKGROUND

The principal mode of filtration in liquid applications is by the depth filtration mechanism. The need for micro-filtration in liquid applications, especially when purifying pharmaceutical or nutraceutical compounds during their manufacture, has necessitated the use of smaller pore structures. During depth filtration the particles load into the several layers of web and increase the pressure differential across the web. When the pressure differential becomes too high, the flow of fluid is stopped and the web has reached its maximum life (capacity). Use of membranes or calendered meltblown nonwovens for micro-filtration further increases inherent pressure differential across the web and thereby further reducing the maximum life of the web. Increased porosity at higher basis weights, while maintaining the high efficiency due to the use of nanofibers, gives additional volume for loading the particles in the web before the web reaches its maximum pressure differential.

Manufacture of high porosity media constructed of nanofibers, in particular of useful polymers such as polyether sulfone, has not heretofore been possible due to limitations in the processes available to manufacture such media. There is therefore a need for more porous, higher basis weight filter media than have hitherto been available.

Document WO2010/107503 A1 discloses a liquid filtration medium containing nanofibers. The filtration medium can be in the form of a fibrous electrospun polymeric nanofiber liquid filtration medium mat.

### SUMMARY OF THE INVENTION

The present invention is directed to a filter medium according to claim 1. A filter is also provided which contains the filter medium of the aforesaid character.

### DETAILED DESCRIPTION OF THE PREFFERD EMBODIMENTS

Applicants specifically incorporate the entire contents of all cited references in this disclosure. Further, when an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

The present invention relates to filtration media for removing fouling agents or contaminants from a liquid, the filtration media including at least one nanofiber layer. removing particulates from a liquid. The nanofiber layer is in the form of a nonwoven web, or nanoweb, where the term "nonwoven" means here a web including a multitude of randomly oriented fibers. By "randomly oriented" means that to the naked eye there appears to be no regular or repeating structure to the direction of the webs as there would be, for example, in a woven or crystalline structure. The fibers can be bonded to each other, or can be unbonded and entangled to impart strength and integrity to the web. The fibers can be staple fibers or continuous fibers, and can comprise a single material or a multitude of materials, either as a combination of different fibers or as a combination of similar fibers each comprised of different materials.

The term "nanoweb" as applied to the present invention refers to a nonwoven web constructed predominantly of nanofibers. Predominantly means that greater than 50% of the fibers in the web are nanofibers, where the term "nanofibers" as used herein refers to fibers having a number average diameter less than 1000 nm, even less than 800 nm, even between about 50 nm and 500 nm, and even between about 100 and 400 nm. In the case of non-round cross-sectional nanofibers, the term "diameter" as used herein refers to the greatest cross-sectional dimension. The nanoweb of the invention can also have greater than 70%, or 90% or it can even contain 100% of nanofibers.

The terms "filter medium" or "filter media" refer to a material or collection of material through which a particulate-carrying fluid passes, with a concomitant and at least temporary deposition of the particulate material in or on the material.

The porosity of the medium is equivalent to 100 x (1.0 - solidity) and is expressed as a percentage of free volume in the medium structure where in solidity is expressed a fraction of solid material in the medium structure.

The terms "flux" and "flow rate" are used interchangeably to refer to the rate at which a volume of fluid passes through a filtration medium of a given area.

"Mean flow pore size" is measured according to ASTM Designation E 1294-89, "Standard Test Method for Pore Size Characteristics of Membrane Filters Using Automated Liquid Porosimeter." Individual samples of different size (8, 20 or 30 mm diameter) are wetted with a low surface tension fluid (1,1,2,3,3,3-hexafluoropropene, or "Galwick," having a surface tension of 16 dyne/cm) and placed in a holder, and a differential pressure of air is applied and the fluid removed from the sample. The differential pressure at which wet flow is equal to one-half the dry flow (flow without wetting solvent) is used to calculate the mean flow pore size using supplied software.

Minimum Pore Size is measured according to ASTM Designation E 1294-89, "Standard Test Method for Pore Size Characteristics of Membrane Filters Using Automated Liquid Porosimeter" which approximately measures pore size characteristics of membranes with a pore size diameter of 0.05 µm to 300 µm by using automated bubble point method from ASTM Designation F 316 using a capillary flow porosimeter (model number CFP-34RTF8A-3-6-L4, Porous Materials, Inc. (PMI), Ithaca, N.Y.). Individual samples of different size (8, 20 or 30 mm diameter) are wetted with low surface tension fluid (1,1,2,3,3,3-hexafluoropropene, or "Galwick," having a surface tension of 16 dyne/cm). Each sample is placed in a holder, and a differential pressure of air was applied and the fluid removed from the sample. The minimum pore size is the last pore to open after the compressed pressure is applied to the sample sheet, and is calculated using software supplied from the vendor.

"Bubble Point" is a measure of maximum pore size in a sample and is measured according to ASTM Designation F316, "Standard Test Methods for Pore Size Characteristics of Membrane Filters by Bubble Point and Mean Flow Pore Test." Individual samples (8, 20 or 30 mm diameter) were wetted with the low surface tension fluid as described above. After placing the sample in the holder, differential pressure (air) is applied and the fluid is removed from the sample. The bubble point is the first open pore after the compressed air pressure is applied to the sample sheet and is calculated using vendor supplied software.

The filtration medium of the present invention typically has a mean flow pore size of between about 0.1 µm and about 10.0 µm. The filtration medium typically has a bubble point of about 0.8 µm to 20.0 µm. The uniformity index (UI) for the pore size is defined as the ratio of the difference in bubble point diameter and the minimum pore size to the difference in the bubble point and mean flow pore. The closer this ratio is to the value of 2, and then the pore distribution is a Gaussian distribution. If the Uniformity Index is very much larger than 2, the nonwoven structure is dominated by pores whose diameters are much bigger than the mean flow pore. If the Uniformity Index (UI) much lower than 2, then the more structure is dominated by pores which have pore diameters lower than the mean flow pore diameter. There will still be a significant number of large pores in the tail end of the distribution.

The uniformity index for of the media of the present invention are in the range of 1.5 to 2.5, and preferably in the range of 1.5 to 2.2.

The filtration media with a Ul lower than 1.5, indicates it possesses pore diameters much larger than the mean flow pore diameter. For example a filtration media with a UI of 1.1, a mean flow pore diameter of 2 um and minimum pore diameter of 0.2 will have a bubble point of 21 um. Although the filter media is rated for 2 um, it has a certain probability that it will function only as a filter media rated for 21 um. For a filtration media with a UI of 2.0um, a mean flow pore diameter of 2 um and minimum pore diameter of 0.2um, the bubble point diameter will be 3.9um. The filtration performance of a media with a bubble point of 3.8 um is higher than that at of a bubble point of 20 um.

The filtration medium furthermore has a porosity of at least about 85 vol %, even between about 85 vol % and about 95 vol %, and even between about 88 vol % and about 95 vol %. The filtration medium has a flow rate through the medium of greater than about 0.055 L/min/cm² of water at 10 psi (69 kPa) differential pressure. The filtration medium has a thickness of between about 10 m and about 600 m, even between about 30m and about 130 m. The filtration medium has a basis weight of between about 2 g/m² and about 100 g/m², even between about 15 g/m² and about 90 g/m².

The filtration medium can consist solely of nanofibers or it can be a combination of a nanofiber layer with a porous substrate (also referred to as a scrim) for structural support.

The nanofibers employed in this invention consist of an aromatic polymer. By "aromatic polymer," it is meant a polymer containing at least one 4-, 5- or 6-membered ring structures in its back bone, preferably 2 or more rings. The nanofibers employed in this invention even more preferably comprise, alternatively consist essentially of, alternatively consist only of, a polymer selected from the group consisting of polyether sulfone (PES), polysulfone, polyimide, and combinations thereof. These polymers are generally rigid polymers having an aromatic backbone with aromacity greater than 60%, preferably greater than 80% up to a 100% (fully aromatic). The aromacity imparts rigidity to the polymer chain and thus to the nanofibers formed thereform. This, at least in part, enables the nonwoven web of the present invention to have the porosity in the desired range. By "consisting essentially of" as used herein, it is meant that the majority of nanofibers may be made entirely of one or a combination of these polymers, or that the fibers themselves may comprise a blended polymer, the majority of which by weight is one or a combination of these polymers. For example, the nanofibers employed in this invention may be prepared from more than 80 wt% of one or a combination of these polymers, more than 90 wt% of one or a combination of these polymers, more than 95 wt% of one or a combination of these polymers, more than 99 wt% of one or a combination of these polymers, more than 99.9 wt% of one or a combination of these polymers, or 100 wt% of one or a combination of these polymers. The nanofibers may consist of 100% one or a combination of these polymers.

The most preferred form of polymer used in the present invention is PES w which is fully aromatic. Fully aromatic PES is defined as greater than 80% of the ether and sulfone linkages being attached directly to two aromatic groups such as benzene ring or similar ring-shaped component or five membered rings. An aromatic PES is defined as greater than 80 % of the ether and sulfone linkages being attached directly to two aromatic groups such as benzene ring or similar ring-shaped component or five membered rings. Polymers with aromatic or most preferred fully aromatic backbones are stiffer in physical characteristics in that the ring structures in the aromatic or most preferred fully aromatic polymers limit the number of conformations that the polymer can assume. These limited conformational states are a direct result of the rigidity of the ring structures in the backbone of the aromatic polymers. Stiffness can be defined as having a percent elongation at break of less than 20%, most preferably less than 15%. Similarly a fully aromatic polyimide (PI) is defined as a polyimide in which at least 80% of the imide linkages are attached directly to two aromatic rings. An aromatic polyimide is defined as a polyimide in which at least 60% of the imide linkages are attached directly to two aromatic rings. Processing aromatic or more preferably fully aromatic polymers such as PES and PI with the electroblowing process gives rise to the unique UI of 1.5 to 2.5 due to the lack of conformational states of these polymers.

A process for making the nanofiber layer(s) of the filtration medium is disclosed in International Publication Number WO2003/080905 (U.S. Ser. No. 10/822,325). The electroblowing method comprises feeding a solution of a polymer in a solvent from mixing chamber through a spinning beam, to a spinning nozzle to which a high voltage is applied, while compressed gas is directed toward the polymer solution in a blowing gas stream as it exits the nozzle. Nanofibers are formed and collected as a web on a grounded collector under vacuum created by vacuum chamber and blower. In this disclosure, the filtration medium comprises a single nanofiber layer made by a single pass of a moving collection apparatus positioned between the spinning beam and the collector through the process. It will be appreciated that the fibrous web can be formed by one or more spinning beams running simultaneously above the same moving collection apparatus. Further according to this disclosure, a single nanofiber layer is made by depositing nanofibers from a single spinning beam in a single pass of the moving collection apparatus, the nanofiber layer having a basis weight of greater than 0.5 g/m², or alternatively greater than 2.1 g/m², or alternatively greater than 5 g/m² or between about 5 g/m² and about 100 g/m², even between about 10 g/m² and about 90 g/m², and even between about 20 g/m² and about 70 g/m², as measured on a dry basis, i.e., after the residual solvent has evaporated or been removed.

The moving collection apparatus is preferably a moving collection belt positioned within the electrostatic field between the spinning beam and the collector. After being collected, the single nanofiber layer is directed to and wound onto a wind-up roll on the downstream side of the spinning beam. Further in this disclosure, any of a variety of porous substrates can be arranged on the moving collection belt to collect and combine with the nanofiber web spun on the substrate so that the resulting composite of the nanofiber layer and the porous substrate is used as the filtration medium. Examples of the porous substrate include spunbonded nonwovens, meltblown nonwovens, needle punched nonwovens, spunlaced nonwovens, wet laid nonwovens, resin-bonded nonwovens, woven fabrics, knit fabrics, apertured films, paper, and combinations thereof.

The collected nanofiber layer(s) are advantageously bonded. Bonding may be accomplished by known methods, including but not limited to thermal calendering between heated smooth nip rolls, ultrasonic bonding, and through gas bonding. Bonding increases the strength and the compression resistance of the medium so that the medium may withstand the forces associated with being handled, being formed into a useful filter, and being used in a filter, and depending on the bonding method used, adjusts physical properties such as thickness, density, and the size and shape of the pores. For instance, thermal calendering can be used to reduce the thickness and increase the density and solidity of the medium, and reduce the size of the pores. This in turn decreases the flow rate through the medium at a given applied differential pressure. In general, ultrasonic bonding bonds a smaller area of the medium than thermal calendering, and therefore has a lesser effect on thickness, density and pore size. Through gas bonding generally has minimal effect on thickness, density and pore size, therefore this bonding method may be preferable in applications in which maintaining high flow rate is most important.

When thermal calendering is used, care must be taken not to over-bond the material, such that the nanofibers melt and no longer retain their structure as individual fibers. In the extreme, over-bonding would result in the nanofibers melting completely such that a film would be formed. One or both of the nip rolls used is heated to a temperature of between about ambient temperature, e.g., about 25° C., and about 300° C., even between about 50° C. and about 200° C. The nanofiber layer(s) are compressed between the nip rolls at a pressure of between about 0 lb/in and about 1000 lb/in (178 kg/cm), even between about 50 lb/in (8.9 kg/cm) and about 550 lb/in (98 kg/cm). The nanofiber layer(s) are advantageously compressed at a line speed of at least about 10 ft/min (3 m/min), even at least about 30 ft/min (9 m/min). Calendering conditions, e.g., roll temperature, nip pressure and line speed, can be adjusted to achieve the desired solidity. In general, application of higher temperature, pressure, and/or residence time under elevated temperature and/or pressure results in increased solidity. In some instances, it is desirable to lightly calender the collected nanofiber layer(s) at a temperature of about 65°C. or less, a nip pressure of less than about 100 lb/in (17.8 kg/cm), a line speed of greater than about 30 ft/min (9 m/min), or a combination of said conditions, resulting in a filter medium having a porosity of between about 85 vol % and about 95 vol %.

### Test Methods

Basis Weight was determined by ASTM D-3776, and reported in g/m².

Solidity was calculated by dividing the basis weight of the sample in g/m² by the polymer density in g/cm³ and by the sample thickness in micrometers, i.e., solidity=basis weight/(density.times.thickness).

Fiber Diameter was determined as follows. Ten scanning electron microscope (SEM) images at 5,000.times. Magnification were taken of each nanofiber layer sample. The diameter of eleven (11) clearly distinguishable nanofibers were measured from each SEM image and recorded. Defects were not included (i.e., lumps of nanofibers, polymer drops, intersections of nanofibers). The average fiber diameter for each sample was calculated.

Thickness was determined by ASTM D1777-64, and is reported in micrometers.

Minimum Pore Size was measured as described above according to ASTM Designation E 1294-89, "Standard Test Method for Pore Size Characteristics of Membrane Filters Using Automated Liquid Porosimeter. Individual samples of different size (8, 20 or 30 mm diameter) were wetted with low surface tension fluid (1,1,2,3,3,3-hexafluoropropene, or "Galwick," having a surface tension of 16 dyne/cm). Each sample was placed in a holder, and a differential pressure of air was applied and the fluid removed from the sample. The minimum pore size is the last pore to open after the compressed pressure is applied to the sample sheet, and is calculated using software supplied from the vendor.

Mean Flow Pore Size was measured according to ASTM Designation E 1294-89, "Standard Test Method for Pore Size Characteristics of Membrane Filters Using Automated Liquid Porosimeter." Individual samples of different size (8, 20 or 30 mm diameter) were wetted with the low surface tension fluid as described above and placed in a holder, and a differential pressure of air was applied and the fluid removed from the sample. The differential pressure at which wet flow is equal to one-half the dry flow (flow without wetting solvent) is used to calculate the mean flow pore size using supplied software.

Bubble Point was measured according to ASTM Designation F316, "Standard Test Methods for Pore Size Characteristics of Membrane Filters by Bubble Point and Mean Flow Pore Test." Individual samples (8, 20 or 30 mm diameter) were wetted with the low surface tension fluid as described above. After placing the sample in the holder, differential pressure (air) is applied and the fluid was removed from the sample. The bubble point was the first open pore after the compressed air pressure is applied to the sample sheet and is calculated using vendor supplied software.

Flow Rate (also referred to as Flux) is the rate at which fluid passes through the sample of a given area and was measured by passing deionized water through filter medium samples having a diameter of 8 mm. The water was forced through the samples using hydraulic pressure (water head pressure) or pneumatic pressure (air pressure over water). The test uses a fluid filled column containing a magnetic float, and a sensor attached to the column reads the position of the magnetic float and provides digital information to a computer. Flow rate is calculated using data analysis software supplied by PMI.

### EXAMPLES

Hereinafter the present invention will be described in more detail in the following examples. An electro-blown spinning or electroblowing process and apparatus for forming a nanofiber web of the invention as disclosed in PCT publication number WO 2003/080905, was used to produce the nanofiber layers and webs of the invention as embodied in the examples below.

Nanofiber layers of Polyether Sulfone (PES) were spun by electroblowing as described in WO 03/080905. PES (available through HaEuntech Co, Ltd. Anyang SI, Korea, a product of BASF) was spun using a 25 weight percent solution in a 20/80 solvent of N, N Dimethylacetamide (DMAc) (available from Samchun Pure Chemical Ind. Co Ltd, Gyeonggi-do, Korea), and N, N Dimethyl Formamide (DMF) (available through HaEuntech Co, Ltd. Anyang SI, Korea, a product of Samsung Fine Chemical Co). The polymer and the solution were fed into a solution mix tank, and transferred to a reservoir. The solution was then fed to the electro-blowing spin pack through a metering pump. The spin pack has a series of spinning nozzles and gas injection nozzles. The spinneret is electrically insulated and a high voltage is applied.

Compressed air at a temperature between 24°C and 80°C was injected through the gas injection nozzles. The fibers exited the spinning nozzles into air at atmospheric pressure, a relative humidity between 50 and 72% and a temperature between 13°C and 24°C. The fibers were laid down on a moving porous belt. A vacuum chamber beneath the porous belt assisted in the laydown of the fibers. The number average fiber diameter for the samples, as measured by technique described earlier, was about 800 nm. By varying the process conditions the various examples of PES were produced.

Nanofibers of Polyimide were produced by thermally heat treating the as spun Polyamic acid (PAA) nanofiber webs at temperatures between 450°C and 600°C for 30 to 240 seconds. Polyamic nanofiber webs were produced from a solution of PMDA/ODA in DMAc solution and electroblown as disclosed in PCT publication number WO 2003/080905

**TABLE 1**

| Characteristics of Continuous Electro-blown Samples | | | | | |
|---|---|---|---|---|---|
| Sample | Basis weight gsm | Mean Flow Pore (µm) | Uniformity Index | Porosity % | Aromaticity % |
| PI-1 | 14.2 | 4.6 | 1.9 | 85.38 | >80 |
| PES-2 | 12.0 | 4.9 | 1.8 | 86.36 | >80 |
| PES-3 | 22.3 | 4.4 | 1.7 | 87.80 | > 80 |
| PES-4 | 37.4 | 3.9 | 1.6 | 89.04 | > 80 |
| PES-5 | 33.5 | 4.3 | 1.8 | 90.17 | > 80 |

For the comparative example, a 1200 g/10 min melt flow rate polypropylene was meltblown using a modular die as described in US Patent 6,114,017. The process conditions that were controlled to produce these samples are the attenuating air flow rate, air temperature, polymer flow rate and temperature, die body temperature, die to collector distance. Along with these parameters, the basis weights of comparative samples were varied by changing the changing the collection speed and polymer through put rate. Die to collector distances ranged from 0.1 m to 0.5 m, while the collector speed was 0.2 to 3 m/min. The die temperature at extrusion varied between 210°C to 280°C. The average fiber diameters of these samples were less than 500 nm. Table 2 shows the characteristics of the webs produced.

**TABLE 2**

| Characteristics of Comparative Melt Blown Samples | | | | | |
|---|---|---|---|---|---|
| Sample | Basis weight gsm | Mean Flow Pore (µm) | Uniformity Index | Porosity % | Aromaticity % |
| 1 | 15.82 | 7.2 | 1.1 | 90.41% | 0 |
| 2 | 21.08 | 5.7 | 1.2 | 88.90% | 0 |
| 3 | 125.80 | 4.7 | 1.3 | 84.63% | 0 |
| 4 | 60.60 | 5.8 | 1.2 | 87.06% | 0 |
| 5 | 46.41 | 6.6 | 1.3 | 85.77% | 0 |
| 6 | 39.00 | 7.6 | 1.2 | 86.82% | 0 |

Meltblown fibers have high porosity, but have a low Uniformity Index below the range of the web of the invention.

The data show the web of the invention to have a smaller mean flow pore size than that of the comparative examples while maintaining a high porosity.

## Claims

1. A filter medium comprising a nanoweb, wherein the nanoweb consists of fibers that consist of an aromatic polymer with an aromaticity greater than 60% and wherein the web has a porosity of 85% or greater and a mean flow pore size of 10 µm or less, wherein the nanoweb has a uniformity index of between 1.5 and 2.5, and wherein the aromatic polymer is processed with an electroblowing process.

2. The filter medium of claim 1 in which the nanoweb has a uniformity index of between 1.5 to 2.2.

3. The filter medium of any one of claims 1 to 2 in which the aromaticity is greater than 80%.

4. The filter medium of any of claims 1 to 3 wherein the aromatic polymers are selected from the group consisting of polyether sulfone, polyimide, and combinations thereof.

5. The filter medium of claim 1 in which the fibers are continuous.

6. The filter medium of any one of claims 1 to 5 in which the nanoweb has a porosity of between 85% to 95%.

7. The filter medium of claim 1 in which the filter medium has a porosity of between 88% to 95%.

8. The filter medium of claim 6 in which the filter medium has a basis weight of between 2 to 100 grams per square meter.

9. The filter medium of claim 8 in which the filter medium has a basis weight of between 15 and 90 grams per square meter.

10. A liquid filtration filter assembly comprising the filter medium of any one of claims 1 to 9.

11. Use of the filter assembly of claim 10 to purify pharmaceutical compounds.

## Patentansprüche

1. Filtermedium, umfassend eine Nanobahn, wobei die Nanobahn aus Fasern besteht, die aus einem aromatischen Polymer mit einer Aromatizität von mehr als 60% bestehen, und wobei die Faserbahn eine Porosität von 85% oder mehr und eine mittlere Strömungsporengröße von 10 µm oder weniger aufweist, wobei die Nanobahn einen Gleichförmigkeitsindex zwischen 1,5 und 2,5 aufweist und wobei das aromatische Polymer mit Hilfe von einem Elektroblasverfahren verarbeitet wird.

2. Filtermedium nach Anspruch 1, wobei die Nanobahn einen Gleichförmigkeitsindex zwischen 1,5 und 2,2 aufweist.

3. Filtermedium nach einem der Ansprüche 1 bis 2, wobei die Aromatizität größer als 80% ist.

4. Filtermedium nach einem der Ansprüche 1 bis 3, wobei die aromatischen Polymere ausgewählt sind aus der Gruppe, bestehend aus Polyethersulfon, Polyimid und Kombinationen davon.

5. Filtermedium nach Anspruch 1, wobei die Fasern endlos sind.

6. Filtermedium nach einem der Ansprüche 1 bis 5, wobei die Nano-Faserbahn eine Porosität zwischen 85% und 95% hat.

7. Filtermedium nach Anspruch 1, wobei das Filtermedium eine Porosität zwischen 88% und 95% hat.

8. Filtermedium nach Anspruch 6, wobei das Filtermedium ein Flächengewicht zwischen 2 und 100 Gramm pro Quadratmeter hat.

9. Filtermedium nach Anspruch 8, wobei das Filtermedium ein Flächengewicht zwischen 15 und 90 Gramm pro Quadratmeter hat.

10. Anordnung zur Flüssigkeitsfiltration, umfassend das Filtermedium nach einem der Ansprüche 1 bis 9.

11. Verwendung der Filteranordnung nach Anspruch 10 zur Reinigung pharmazeutischer Verbindungen.

## Revendications

1. Milieu filtrant comprenant une nanobande, dans lequel la nanobande est constituée par des fibres qui sont constituées par un polymère aromatique qui présente une aromaticité supérieure à 60 % et dans lequel la bande présente une porosité de 85 % ou plus et une taille moyenne de pores d'écoulement de 10 µm ou moins, dans lequel la nanobande présente un indice d'uniformité entre 1,5 et 2,5, et dans lequel le polymère aromatique est traité à l'aide d'un procédé d'électrosoufflage.

2. Milieu filtrant selon la revendication 1, dans lequel la nanobande présente un indice d'uniformité entre 1,5 et 2,2.

3. Milieu filtrant selon l'une quelconque des revendications 1 à 2, dans lequel l'aromaticité est supérieure à 80 %.

4. Milieu filtrant selon l'une quelconque des revendications 1 à 3, dans lequel les polymères aromatiques sont sélectionnés parmi le groupe qui est constitué par le polyéthersulfone, le polyimide et des combinaisons de ceux-ci.

5. Milieu filtrant selon la revendication 1, dans lequel les fibres sont continues.

6. Milieu filtrant selon l'une quelconque des revendications 1 à 5, dans lequel la nanobande présente une porosité entre 85 % et 95 %.

7. Milieu filtrant selon la revendication 1, dans lequel le milieu filtrant présente une porosité entre 88 % et 95 %.

8. Milieu filtrant selon la revendication 6, dans lequel le milieu filtrant présente un grammage entre 2 et 100 grammes par mètre carré.

9. Milieu filtrant selon la revendication 8, dans lequel le milieu filtrant présente un grammage entre 15 et 90 grammes par mètre carré.

10. Ensemble filtrant pour la filtration des liquides comprenant le milieu filtrant selon l'une quelconque des revendications 1 à 9.

11. Utilisation de l'ensemble filtrant de la revendication 10 pour purifier des composés pharmaceutiques.
